# EUROPEAN PATENT SPECIFICATION

(11) **EP 3 552 499 B1**
(45) Date of publication and mention of the grant of the patent: **08.05.2024**
(21) Application number: 17879677.7
(22) Date of filing: 16.10.2017
(51) Int. Cl.: A23L 5/00, A23G 1/00, A23G 3/00, A23G 3/32, A23G 9/00, A23L 9/10, A23G 1/54, A23G 3/54, A23G 9/48

(54) **SURFACE-BAKED FOOD ITEM AND METHOD FOR MANUFACTURING SAME**
LEBENSMITTELPRODUKT MIT GEBACKENER OBERFLÄCHE UND VERFAHREN ZUR HERSTELLUNG DAVON
PRODUIT ALIMENTAIRE CUIT EN SURFACE ET SON PROCÉDÉ DE FABRICATION

(30) Priority: 12.12.2016 JP 2016240367
(43) Date of publication of application: 16.10.2019
(73) Proprietor: Ohayo Dairy Products Co., Ltd., Okayama-shi, Okayama 703-8505 (JP)
(72) Inventor: IMAMIYA Ryo, Okayama-shi Okayama 703-8505 (JP)
(74) Representative: Casalonga
(86) International application number: PCT/JP2017/037410
(87) International publication number: WO 2018/110069

(56) References cited:
- WO-A1-03/068001
- BE-A3- 1 017 177
- CN-A- 105 875 767
- JP-A- H09 252 737
- JP-A- H10 327 757
- JP-A- 2002 223 700
- JP-A- 2002 223 700
- JP-A- 2002 503 490
- JP-A- 2005 516 633
- JP-A- 2013 236 575
- US-A- 2 672 422
- US-A- 5 518 744
- US-A1- 2007 092 607
- US-A1- 2008 026 131
- Sandra: "Tuxedo Creme Brulee", , 27 March 2014 (2014-03-27), XP002798730, Retrieved from the Internet: URL:https://www.dashofsanity.com/tuxedo-cr eme-brulee-vanilla-bean-creme-brulee-dark- chocolate-ganache/ [retrieved on 2020-04-17]
- scharffenberger: "Black and white creme brulee", , February 2007 (2007-02), XP002798731, Retrieved from the Internet: URL:https://www.epicurious.com/recipes/foo d/views/black-and-white-creme-brulee-23730 5 [retrieved on 2020-04-17]
- Bon Appétit: "Black and white creme brulee", , December 1997 (1997-12), XP002798732, Retrieved from the Internet: URL:https://www.epicurious.com/recipes/foo d/views/black-and-white-creme-brulee-4532 [retrieved on 2020-04-17]

## Description

### Technical Field

The present invention relates to a surface-baked food item and a method for manufacturing the same.

### Background Art

Sandra : "Tuxedo Creme Brulee", 27 March 2014, XP002798730 (retrieved from the internet: URL:https://www.dashofsanity.com/tuxedo-creme-brulee-vanilla-beancreme-brulee-dark-chocolate-ganache/) relates to a vanilla bean creme brulee on top of a layer of dark chocolate ganache.

Scharffenberger: "Black and white crème brulee", February 2007, XP002798731 (retrieved from the internet: URL:https://www.epicurious.com/recipes/food/views/black-and-whitecreme-brulee-237305) relates to a crème brulee with a cool layer of vanilla custard with a topping of silky dark chocolate mousse.

Bon Appétit: "Black and white crème brulee", December 1997, XP002798732 (retrieved from the internet: URL:https://www.epicurious.com/recipes/food/views/black-and-whitecreme-brulee-4532) relates to a crème brulee with vanilla custard and bittersweet or semisweet chocolate.

JP H10-327757 A relates to preparing a laminated cake composed of pudding and souffle promage integrated with each other.

JP 2002-223700 A relates to obtaining a baked confectionery which has an appearance like snow laid on the surface, the decoration to be hardly peeled off, whose outside has a crisp palatability different from that of the inside and which comprises chocolate as a main raw material and to providing a method for producing the same.

CN 105875767 A relates to a preparation method for chocolate-melon creme brulee matching chocolate, melon, pudding and crème brulee.

US 2007/092607 A1 relates to a foodstuff comprising at least two components separated by a barrier layer, the barrier layer being a film of a polyol, polyol derivative or mixture thereof and a method for manufacturing such a foodstuff.

US 2672422 A relates to a dessert including two dry pulverulent mixtures.

US 2008/026131 A1 relates to a process for forming a hard sugar coating on an irregularly shaped chocolate confection and applying at least two coating syrups onto the surface of the confections and a relating product.

BE 1017177 A3 relates to a croquet comprising a casing made from hard chocolate which contains a chocolate filling and is surrounded by layer of cake that becomes crispy when deep-fried.

WO 03/068001 A1 relates to a frozen dessert product comprising a frozen dessert, a moisture barrier covering at least one surface of the frozen dessert and a glassy matrix topping positioned over the moisture barrier.

A method has heretofore been known in which sugar is sprinkled on the surface of food items such as pudding, crème brulee, custard pudding, ice cream, other western confectionery and baked confectionery, and bread, and is heated to caramelize the sugar attached to the surface of the food items to achieve a crispy texture and a unique savory flavor.

Further, from the viewpoint of convenience for eating and food distribution, manufactured food items are packaged in various ways before distributed. For example, Patent Literature 1 discloses a method by which the surfaces of food items contained in containers are continuously baked while the containers are prevented from being thermally deformed.

### Citation List

### Patent Literature

Patent Literature 1: Japanese Patent Application Laid-Open No. Hei. 9-252737

### Summary of Invention

### Technical Problem

However, caramel is likely to absorb moisture, and therefore easily becomes sticky due to the moisture of food items themselves and moisture in the air, so that its good crispy texture and savory flavor just after heating are not maintained.

Therefore, even when food items with caramelized surface are manufactured, their good crispy texture is lost when the food items are distributed after manufacturing, which is disadvantageous in that customers who buy the food items cannot enj oy such a good texture. Solution to Problem

In view of such a problem, the present invention is provided with a surface-baked food item according to claim 1 and a method for manufacturing a surface-baked food according to claim 4. Preferred embodiments are disclosed in the dependent claims.

### Brief Description of Drawing

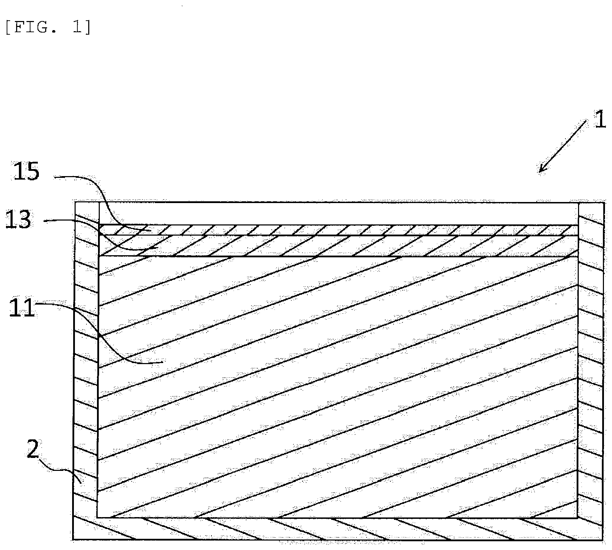

FIG. 1 is a schematic cross-sectional view of a food item according to the present invention contained in a container. Description of Embodiments

Hereinbelow, the present invention will be specifically described. FIG. 1 is a schematic cross-sectional view of a food item contained in a container. A food item 1 according to the present invention is provided to be contained in a container 2 in such a manner that the surface of a first food item 11 is coated with a second food item 13, and becomes a state in which a caramel portion 15 is further provided on the surface of the second food item 13. Note that an embodiment that will be described below includes a heated product obtained by caramelization, and therefore the heated product is referred to as a "caramel portion," but when a heated product obtained not by caramelization is used, the "caramel portion" can be replaced with "heated product" as an alternative meaning.

The first food item 11 is a main food item to be subjected to caramelization. Examples thereof may include western unbaked confectionery such as pudding, crème brulee, custard pudding, and cake, ice cream, "iced milk" (ice cream with a milk solids content of 10% or more and a milk fat content of 3% or more), "lacto-ice" (ice cream with a milk solids content of 3% or more), sherbet, other baked confectionery, cheese, and yogurt. Alternatively, the first food item 11 may be pasta, meat, bread, or a cookie.

The second food item 13 contains fat and oil. Particularly suitable examples thereof may include chocolates such as chocolate, "quasi chocolate" (quasi chocolate refers to a dough containing only a quasi-chocolate dough with a cacao content of not less than 15% of the total weight (cocoa butter content of not less than 3% of the total weight), a fat content of not less than 18% of the total weight, and a moisture content of not more than 3% of the total weight (excluding those falling under the category of chocolate dough) or refers to a dough containing only a quasi-chocolate dough with a cacao content of not less than 7% of the total weight (cocoa butter content of not less than 3% of the total weight), a fat content of not less than 18% of the total weight, a milk solids content of not less than 12.5% of the total weight (a milk fat content of not less than 2% of the total weight), and a moisture content of not more than 3% of the total weight (excluding those falling under the category of chocolate dough)), chocolate confectionery, "quasi chocolate confectionery" (quasi chocolate confectionery refers to a chocolate processed product with the quasi-chocolate dough content of less than 60% of the total weight), "Nama-Chocolate" ("Nama-Chocolate" refers to a dough with a chocolate dough content of not less than 60% of the total weight, a cream content of not less than 10% of the total weight, and a moisture content of not less than 10% of the total weight), and chocolate-using food items.

The second food item 13 herein referred to as a "food item containing fat and oil" may include fat and oil itself such as fat and oil derived from a vegetable source such as palm, coconut, soybean, corn, rapeseed, sunflower, cotton seed, cacao (cocoa butter), shea, or rice, animal fat and oil such as butter, cream, or lard, edible refined and processed fat and oil, or margarine. As the second food item 13, the above-mentioned chocolates and fats and oils may be used singly or in combination of two or more food items appropriately selected therefrom.

The caramel portion 15, which will be described later, is a heated product of sugar obtained by heating sugar sprinkled on the second food item 13. Here, the sugar is not particularly limited, and examples thereof may include: so-called sucrose such as refined sugar (e.g. , granulated sugar, white soft sugar, white crystal sugar, brown soft sugar, light brown crystal sugar, powdered sugar, cube sugar, and rock sugar) and unrefined sugar (e.g., black sugar, Wasanbon (refined Japanese sugar), maple sugar, and casonade) ; and saccharides such as glucose, fructose, xylose, and trehalose. These sugars may be used in combination as appropriate. The surface temperature during heating is preferably 100°C to 350°C, and more preferably 150°C to 300°C. Note that the above-described heated product may be obtained by only caramelization or by caramelization and Maillard reaction that occur at the same time. Alternatively, the heated product may be obtained by only Maillard reaction without caramelization.

The process of manufacturing the food item 1 will be described. Particularly when the food item 1 is contained in a container, the first food item 11 is first charged into a predetermined container 2, and then the second food item 13 is placed so as to coat at least part of the surface of the first food item. At this time, the second food item 13 in a liquid state may be poured onto the first food item 11 contained in the container 2, or the second food item 13 in a molded solid state may be put on the surface of the first food item 11. The thickness of the second food item 13 is preferably 0.8 mm to 7.0 mm, and more preferably 1.0 mm to 5.0 mm.

After the first food item 11 is charged and then the second food item 13 is placed so as to coat the first food item 11 in such a manner as described above, sugar is sprinkled on the surface of the second food item 13 and heated. The amount of the sugar is preferably 0.02 g/cm² to 0.20 g/cm², and more preferably 0. 04 g/cm² to 0.16 g/cm². The sugar attached to the surface of the second food item 13 is caramelized by heating and fixed so that the caramel portion 15 is formed.

A means for the heating is not particularly limited. As is generally known, the sugar may be directly exposed to flame with a burner or the like. Alternatively, various heaters such as a halogen heater and a near-infrared heater may be appropriately used.

The caramel portion 15 shown in FIG. 1 is clearly separated from the second food item 13, but may not be clearly separated from the second food item 13 because part of the second food item 13 is practically melted by heating for caramelization so that the second food item 13 melted by heating and the melted sugar are mixed and then fixed by cooling.

In the case of a conventional general food item with caramelized surface such as a confection, a caramel portion 15 is obtained by heating sugar directly sprinkled on a food item herein referred to as the first food item 11. The caramel portion 15 of such a conventional food item is in direct contact with the first food item 11 and therefore easily absorbs moisture originally contained in the first food item 11, so that its good crispy texture is quickly lost.

However, in the present invention, the second food item 13 is interposed between the first food item 11 and the caramel portion 15, and therefore the caramel portion 15 is less likely to absorb moisture from the first food item 11. Further, oil contained in the second food item 13 further prevents the caramel portion 15 from absorbing moisture. As a result, the good crispy texture of surface of the food item achieved by caramelization can be maintained for a long period of time. In the present invention, how the second food item 13 is placed on the first food item 11 is not particularly limited. For example, there may be a method in which the second food item 13 previously prepared may be placed on the first food item 11 prepared after the second food item 13 has been prepared. Also when the second food item 13 is placed on the first food item 11 in this way, the crispy texture of the caramel portion 15 can be achieved.

When the first food item 11 is, for example, a food item having a low melting point, such as sherbet, heat generated by heating for caramelization is not directly conducted to the first food item 11 due to the interposition of a layer of the second food item 13, and therefore the first food item 11 is hard to melt. This contributes to the quality control of the first food item 11.

### [Example 1]

### <Comparison 1>

Hereinbelow, food items contained in containers were actually manufactured in the following manner and stored under certain conditions by way of example.

### (Food item of Example 1)

First food item: ice cream
Second food item: chocolate-using food item
Storage environment: freezer (-20°C or lower (set at -24°C)) (Food item of Comparative Example 1)
First food item: ice cream
Second food item: none
Storage environment: freezer (-20°C or lower (set at -24°C))

The ice cream used as the first food item in Example 1 and the ice cream used as the first food item in Comparative Example 1 are the same, and the storage environment in Example 1 and the storage environment in Comparative Example 1 are the same.

The ice cream used as the first food item 11 in Example 1 and Comparative Example 1 had a milk solids content of 15.0% or more (milk fat content: 8.0% or more). The chocolate-using food item used in Example 1 had a vegetable fat and oil content of 55.5% and a cocoa butter content of 2.2%, and further appropriately contained whole milk powder, cream powder, sugar, lactose, etc.

The food item of Example 1 was manufactured by charging ice cream into a container, pouring a chocolate-using food item onto the surface of the ice cream so that the surface of the ice cream was entirely coated with the chocolate-using food item having a thickness of about 1 mm, sprinkling granulated sugar on the chocolate-using food item, and baking the granulated sugar with a burner for caramelization.

On the other hand, the food item of Comparative Example 1 was manufactured in the same manner as general ice cream contained in a container by charging ice cream into a container, sprinkling granulated sugar directly on the surface of the ice cream, and baking the granulated sugar with a burner for caramelization.

The results of comparison are shown in the following Table 1. Table 1 shows the results of a sensory evaluation performed by tasting by a total of seven persons to evaluate with time how the crispy texture of the surface caramel portion was maintained according to the following three criteria: "3. The crispy texture was well maintained.", "2. The crispy texture was maintained to some extent.", and "1. The crispy texture was lost.".

**[Table 1]**

| Elapsed time after baking | Samples | | | |
|---|---|---|---|---|
| | Food item of Comparative Example 1 | | Food item of Example 1 | |
| | Result | Comment | Result | Comment |
| After 2 hours | 2 | The crispy texture was maintained. | 3 | The crispy texture was maintained. |
| After 6 hours | 2 | The crispy texture was maintained. | 3 | The crispy texture was maintained. |
| After 1 day | 2 | The crispy texture was maintained. | 3 | The crispy texture was maintained. |
| After 2 days | 2 | The crispy texture was maintained. | 3 | The crispy texture was maintained. |
| After 1 week | 1 | The crispy texture achieved by caramelization was lost. Only the grainy texture of sugar remaining unmelted during baking remained. | 3 | The crispy texture was maintained. |
| After 2 weeks | 1 | The crispy texture achieved by caramelization was lost. Only the grainy texture of sugar remaining unmelted during baking remained. | 3 | The crispy texture was maintained. |
| After about 3 weeks (After 23 days) | - | | 3 | The crispy texture was maintained. |
| After about 2 months (After 70 days) | - | | 2 | The surface caramel portion was slightly sticky but its crispy texture was maintained. |
| After about 3 months (After 90 days) | - | | 2 | The surface caramel portion was slightly sticky but its crispy texture was maintained. |

As shown in Table 1, in the case of the food item of Example 1, the crispy texture of the surface caramel portion was well maintained even after a lapse of about three weeks, and was maintained to some extent even after a lapse of about three months. Further, the surface caramel portion of the food item of Example 1 was very crispy even just after caramelization performed by baking (e.g., after two hours from baking) . Therefore, the food item of Example 1 can give a more crispy texture as compared with the food item of Comparative Example 1 using a conventional method in which sugar is directly sprinkled on the surface of ice cream and baked for caramelization.

### [Example 2]

### <Comparison 2>

Hereinbelow, Comparison 2 will be described. (Food item of Example 2)
First food item: pudding
Second food item: chocolate-using food item
Storage environment: Refrigerator (10°C or lower) (Food Item of Comparative Example 2)
First food item: pudding
Second food item: none
Storage environment: Refrigerator (10°C or lower)

Note that the pudding used as the first food item in Example 2 and the pudding used as the first food item in Comparative Example 2 are the same, and the storage environment in Example 2 and the storage environment in Comparative Example 2 are the same.

The pudding used as the first food item in Example 2 and Comparative Example 2 is not limited by its components, composition, and manufacturing method and is an already-known one. Further, the composition of the chocolate-using food item used in Example 2 is the same as that of the chocolate-using food item used in the above-described Example 1.

The food item of Example 2 was manufactured in the following manner. A liquid pudding mix obtained in such a manner as described above was charged into a container. After the liquid pudding mix set, a chocolate-using food item was poured onto the pudding to have a thickness of about 1 mm. Then, granulated sugar was sprinkled on the chocolate and baked with a halogen heater for caramelization.

On the other hand, the food item of Comparative Example 2 was manufactured in the following manner. A liquid pudding mix obtained in such a manner as described above was charged into a container. After the liquid pudding mix set, granulated sugar was sprinkled on the surface of the pudding and baked with a halogen heater for caramelization.

As a result of Comparison 2, the caramel portion of Comparative Example 2 almost completely lost its crispy texture in about half a day (about 12 hours), and was then turned to almost a liquid state after a lapse of one day and therefore completely lost its crispy texture.

The food item of Example 2 was not subjected to a long-term test performed in Comparison 1, but maintained its crispy texture even after a lapse of at least 3 days from caramelization.

The present invention is not limited to the above examples. Although the food items contained in containers have been described above, the present invention is not limited to such food items contained in containers. For example, the surface (part or all of the surface) of the first food item 11 formed into a predetermined shape without using the container 2 may be coated with the second food item 13. Then, sugar is attached to the surface of the second food item 13 and then caramelized. That is, the present invention can be applied also to food items not contained in the containers 2, such as so-called ice cream bars.

Further, the first food item 11 or the second food item 13 may be mixed with nuts, if necessary. Further, the food item according to the present invention may be wrapped with an outer edible part or may be sandwiched between outer edible parts . Examples of the outer edible part may include monaka wafers, cones, wafers, and cookies . The food item according to the present invention makes it possible to prevent such monaka wafers or cones from absorbing moisture, and therefore the crispy texture of monaka wafers or cones can be maintained.

As described above, the thickness of the layer of the second food item 13 can be appropriately determined from the viewpoint of the amount and properties of the first food item 11. However, the influence of the second food item 13 on the taste and texture of the first food item 11 as a main component can be reduced by reducing the thickness of the second food item 13.

Further, as described above, the second food item 13 is melted and mixed with surface sugar by heating. Therefore, depending on the type of the second food item 13, a unique and original flavor can further be added in addition to good texture and flavor of caramel itself.

### Reference Signs List

- 1: food item
- 2: container
- 11: first food item
- 13: second food item
- 15: caramel portion

## Claims

1. A surface-baked food item (1) comprising a first food item (11), and a second food item (13) containing fat and oil, wherein part or all of a surface of the second food item (13) is coated with a heated product of sugar (15),
wherein the first food item (11) is at least one type or two types or more food items selected from the food item group consisting of pudding, crème brulee, custard pudding, ice cream, cake, "iced milk" - ice cream with a milk solids content of 10% or more and a milk fat content of 3% or more, "lacto-ice" - ice cream with a milk solids content of 3% or more, sherbet, cheese, yogurt, pasta, and meat,
wherein the second food item (13) is at least one type or two types or more food items selected from the food item group consisting of chocolates; fat and oil derived from a vegetable source such as palm, coconut, soybean, corn, rapeseed, sunflower, cotton seed, cacao - cocoa butter, shea or rice; animal fat and oil such as butter, cream or lard; edible refined and processed fat and oil or margarine,
wherein the second food item (13) and the heated product of sugar (15) are in a form of layers,
the layer of the second food item (13) has a thickness of 0.8 mm to 7.0 mm,
the layer of the second food item (13) coats at least part of a surface of the first food item (11), and the layer of the heated product of sugar (15) coats part or all of a surface of the layer of the second food item (13).

2. The surface-baked food item (1) according to claim 1, wherein the second food item (13) is placed so as to coat a surface of the first food item (11) filled in a container (2) having an opening, the surface being located on an opening side of the container (2), wherein the first food item (11), the second food item (13), and the heated product of sugar are placed in its turn from bottom side of the container (2).

3. The surface-baked food item (1) according to any one of claims 1 to 2, wherein the amount of sugar of the heated product of sugar is 0.02 g/cm2 to 0.20 g/cm2.

4. A method for manufacturing a surface-baked food including a first food item (11) and a second food item (13) that coats at least part of a surface of the first food item (11) and contains fat and oil, the method comprising the step of heating sugar attached to a surface of the second food item (13) to obtain a heated product of sugar obtained by heating sugar being sprinkled on the second food item (13),
wherein the first food item (11) is at least one type or two types or more food items selected from the food item group consisting of pudding, crème brulee, custard pudding, ice cream, cake, "iced milk" - ice cream with a milk solids content of 10% or more and a milk fat content of 3% or more, "lacto-ice" - ice cream with a milk solids content of 3% or more, sherbet, cheese, yogurt, pasta, meat, and bread,
wherein the second food item (13) is at least one type or two types or more food items selected from the food item group consisting of chocolates; fat and oil derived from a vegetable source such as palm, coconut, soybean, corn, rapeseed, sunflower, cotton seed, cacao - cocoa butter, shea or rice; animal fat and oil such as butter, cream, lard, edible refined and processed fat and oil or margarine,
wherein the second food item (13) and the heated product of sugar (15) are in a form of layers,
the layer of the second food item (13) has a thickness of 0.8 mm to 7.0 mm,
the layer of the second food item (13) coats at least part of a surface of the first food item (11), and the layer of the heated product of sugar (15) coats part or all of a surface of the layer of the second food item (13).

5. The method for manufacturing a surface-baked food according to claim 4, wherein the heated product of sugar is obtained by caramelizing the sugar by heating.

6. The method for manufacturing a surface-baked food according to claim 4 or 5, the method further including step of charging the first food item (11) in a container (2), coating the surface of the first food item (11) with the second food item (13), sprinkling the sugar on the surface of the second food item (13), then heating the sugar to obtain a heated product of sugar.

7. The method for manufacturing a surface-baked food according to any one of claims 4 to 6, wherein the amount of sugar of the heated product of sugar is 0.02 g/cm2 to 0.20 g/cm2.

## Patentansprüche

1. Lebensmittelprodukt (1) mit gebackener Oberfläche, das ein erstes Lebensmittelprodukt (11) und ein zweites Lebensmittelprodukt (13), welches Fett und Öl enthält, umfasst, wobei ein Teil oder die gesamte Oberfläche des zweiten Lebensmittelproduktes (13) mit einem erhitzten Zuckerprodukt (15) beschichtet ist,
wobei das erste Lebensmittelprodukt (11) mindestens eine Art ist oder zwei Arten oder mehrere Lebensmittelprodukte sind, die aus der Gruppe von Lebensmittelprodukten ausgewählt ist/sind, die aus Pudding, Crème Brûlée, Vanillepudding, Eiscreme, Kuchen, "geeister Milch" - Eiscreme mit einem Gehalt an Milchtrockenmasse von 10 % oder mehr und einem Gehalt an Milchfett von 3 % oder mehr, "Lacto-Eis" - Eiscreme mit einem Gehalt an Milchtrockenmasse von 3 % oder mehr, Sorbet, Käse, Joghurt, Teigwaren und Fleisch besteht,
wobei das zweite Lebensmittelprodukt (13) mindestens eine Art ist oder zwei Arten oder mehrere Lebensmittelprodukte sind, die aus der Gruppe von Lebensmittelprodukten ausgewählt ist/sind, die aus Schokolade, Fetten und Ölen aus pflanzlichen Quellen wie beispielsweise Palmen, Kokosnüssen, Sojabohnen, Mais, Raps, Sonnenblumen, Baumwollsamen, Kakao, Kakaobutter, Shea oder Reis; tierischen Fetten und Ölen wie beispielsweise Butter, Sahne oder Schmalz; raffinierten und verarbeiteten Speisefetten und -ölen oder Margarine besteht,
wobei das zweite Lebensmittelprodukt (13) und das erhitzte Zuckerprodukt (15) in Form von Schichten vorliegen,
die Schicht des zweiten Lebensmittelproduktes (13) eine Dicke von 0,8 mm bis 7,0 mm aufweist,
die Schicht des zweiten Lebensmittelproduktes (13) mindestens einen Teil einer Oberfläche des ersten Lebensmittelproduktes (11) bedeckt und die Schicht des erhitzten Zuckerproduktes (15) einen Teil oder die gesamte Oberfläche der Schicht des zweiten Lebensmittelproduktes (13) bedeckt.

2. Lebensmittelprodukt (1) mit gebackener Oberfläche nach Anspruch 1, wobei das zweite Lebensmittelprodukt (13) so angeordnet ist, dass es eine Oberfläche des ersten Lebensmittelproduktes (11), das in einen Behälter (2) mit einer Öffnung gefüllt ist, beschichtet, wobei sich die Oberfläche auf einer Öffnungsseite des Behälters (2) befindet, wobei das erste Lebensmittelprodukt (11), das zweite Lebensmittelprodukt (13) und das erhitzte Zuckerprodukt der Reihe nach von der Bodenseite des Behälters (2) her angeordnet sind.

3. Lebensmittelprodukt (1) mit gebackener Oberfläche nach einem der Ansprüche 1 bis 2, wobei die Zuckermenge des erhitzten Zuckerproduktes 0,02 g/cm² bis 0,20 g/cm² beträgt.

4. Verfahren zur Herstellung eines Lebensmittelproduktes mit gebackener Oberfläche , das ein erstes Lebensmittelprodukt (11) und ein zweites Lebensmittelprodukt (13) umfasst, das mindestens einen Teil einer Oberfläche des ersten Lebensmittelproduktes (11) bedeckt und Fett und Öl enthält, wobei das Verfahren den Schritt des Erhitzens von Zucker umfasst, der an einer Oberfläche des zweiten Lebensmittelproduktes (13) angebracht ist, um ein erhitztes Zuckerprodukt zu erhalten, das durch Erhitzen von Zucker erhalten wird, der auf das zweite Lebensmittelprodukt (13) gestreut wird,
wobei das erste Lebensmittelprodukt (11) mindestens eine Art oder zwei Arten oder mehrere Lebensmittelprodukte ist, die aus der Gruppe von Lebensmittelprodukten ausgewählt sind, die aus Pudding, Crème Brûlée, Vanillepudding, Eiscreme, Kuchen, "geeister Milch" - Eiscreme mit einem Gehalt an Milchtrockenmasse von 10 % oder mehr und einem Gehalt an Milchfett von 3 % oder mehr, "'Lacto-Eis" - Eiscreme mit einem Gehalt an Milchtrockenmasse von 3 % oder mehr, Sorbet, Käse, Joghurt, Teigwaren, Fleisch und Brot besteht,
wobei das zweite Lebensmittelprodukt (13) mindestens eine Art ist oder zwei Arten oder mehrere Lebensmittelprodukte sind, die aus der Gruppe von Lebensmittelprodukten ausgewählt ist/sind, die aus Schokolade, Fetten und Ölen aus pflanzlichen Quellen wie beispielsweise Palmen, Kokosnüssen, Sojabohnen, Mais, Raps, Sonnenblumen, Baumwollsamen, Kakao, Kakaobutter, Shea oder Reis; tierischen Fetten und Ölen wie beispielsweise Butter, Sahne, Schmalz; raffinierten und verarbeiteten Speisefetten und -ölen oder Margarine besteht,
wobei das zweite Lebensmittelprodukt (13) und das erhitzte Zuckerprodukt (15) in Form von Schichten vorliegen,
die Schicht des zweiten Lebensmittelproduktes (13) eine Dicke von 0,8 mm bis 7,0 mm aufweist,
die Schicht des zweiten Lebensmittelproduktes (13) mindestens einen Teil einer Oberfläche des ersten Lebensmittelproduktes (11) bedeckt und die Schicht des erhitzten Zuckerproduktes (15) einen Teil oder die gesamte Oberfläche der Schicht des zweiten Lebensmittelproduktes (13) bedeckt.

5. Verfahren zur Herstellung eines Lebensmittelproduktes mit gebackener Oberfläche nach Anspruch 4, wobei das erhitzte Zuckerprodukt durch Karamellisieren des Zuckers durch Erhitzen erhalten wird.

6. Verfahren zur Herstellung eines Lebensmittelproduktes mit gebackener Oberfläche nach Anspruch 4 oder 5, wobei das Verfahren ferner den Schritt des Einfüllens des ersten Lebensmittelproduktes (11) in einen Behälter (2), des Beschichtens der Oberfläche des ersten Lebensmittelproduktes (11) mit dem zweiten Lebensmittelprodukt (13), des Streuens des Zuckers auf die Oberfläche des zweiten Lebensmittelproduktes (13) und des anschließenden Erhitzens des Zuckers zum Erhalten eines erhitzten Zuckerproduktes umfasst.

7. Verfahren zur Herstellung eines Lebensmittelproduktes mit gebackener Oberfläche nach einem der Ansprüche 4 bis 6, wobei die Zuckermenge des erhitzten Zuckerproduktes 0,02 g/cm² bis 0,20 g/cm² beträgt.

## Revendications

1. Article alimentaire (1) cuit en surface comprenant un premier article alimentaire (11), et un deuxième article alimentaire (13) contenant des matières grasses et de l'huile, dans lequel une partie ou la totalité d'une surface du deuxième article alimentaire (13) sont recouvertes d'un produit de sucre chauffé (15),
dans lequel le premier article alimentaire (11) est au moins un type ou deux types ou plus d'articles alimentaires sélectionnés dans le groupe d'articles alimentaires constitué de crème-dessert, crème brûlée, flan, crème glacée, gâteau, « lait glacé » - crème glacée avec une teneur en matière sèche du lait de 10 % ou plus et une teneur en matière grasse du lait de 3 % ou plus, « glace lactée » - crème glacée avec une teneur en matière sèche du lait de 3 % ou plus, sorbet, fromage, yaourt, pâtes, et viande,
dans lequel le deuxième article alimentaire (13) est au moins un type ou deux types ou plus d'articles alimentaires sélectionnés dans le groupe d'articles alimentaires constitué de chocolats ; matières grasses et huile dérivées d'une source végétale telle que palmier, noix de coco, soja, maïs, colza, tournesol, graine de coton, cacao - beurre de cacao, karité ou riz ; matière grasse et huile animales telles que beurre, crème ou saindoux ; matières grasses et huile raffinées et traitées comestibles ou margarine,
dans lequel le deuxième article alimentaire (13) et le produit de sucre chauffé (15) sont sous une forme de couches,
la couche du deuxième article alimentaire (13) a une épaisseur de 0,8 mm à 7,0 mm,
la couche du deuxième article alimentaire (13) recouvre au moins une partie d'une surface du premier article alimentaire (11), et la couche du produit de sucre chauffé (15) recouvre une partie ou la totalité d'une surface de la couche du deuxième article alimentaire (13).

2. Article alimentaire (1) cuit en surface selon la revendication 1, dans lequel le deuxième article alimentaire (13) est placé de façon à recouvrir une surface du premier article alimentaire (11) présent dans un récipient (2) ayant une ouverture, la surface étant située sur un côté d'ouverture du récipient (2), dans lequel le premier article alimentaire (11), le deuxième article alimentaire (13) et le produit de sucre chauffé sont placés les uns après les autres depuis le côté inférieur du récipient (2).

3. Article alimentaire (1) cuit en surface selon l'une quelconque des revendications 1 à 2, dans lequel la quantité de sucre du produit de sucre chauffé est de 0,02 g/cm² à 0,20 g/cm².

4. Procédé pour fabriquer un aliment cuit en surface comportant un premier article alimentaire (11) et un deuxième article alimentaire (13) qui recouvre au moins une partie d'une surface du premier article alimentaire (11) et contient des matières grasses et de l'huile, le procédé comprenant l'étape consistant à chauffer du sucre fixé à une surface du deuxième article alimentaire (13) pour obtenir un produit de sucre chauffé obtenu en chauffant du sucre qui est saupoudré sur le deuxième article alimentaire (13),
dans lequel le premier article alimentaire (11) est au moins un type ou deux types ou plus d'articles alimentaires sélectionnés dans le groupe d'articles alimentaires constitué de crème-dessert, crème brûlée, flan, crème glacée, gâteau, « lait glacé » - crème glacée avec une teneur en matière sèche du lait de 10 % ou plus et une teneur en matière grasse du lait de 3 % ou plus, « glace lactée » - crème glacée avec une teneur en matière sèche du lait de 3 % ou plus, sorbet, fromage, yaourt, pâtes, viande, et pain,
dans lequel le deuxième article alimentaire (13) est au moins un type ou deux types ou plus d'articles alimentaires sélectionnés dans le groupe d'articles alimentaires constitué de chocolats ; matières grasses et huile dérivées d'une source végétale telle que palmier, noix de coco, soja, maïs, colza, tournesol, graine de coton, cacao - beurre de cacao, karité ou riz ; matière grasse et huile animales telles que beurre, crème, saindoux, matières grasses et huile raffinées et traitées comestibles ou margarine,
dans lequel le deuxième article alimentaire (13) et le produit de sucre chauffé (15) sont sous une forme de couches,
la couche du deuxième article alimentaire (13) a une épaisseur de 0,8 mm à 7,0 mm,
la couche du deuxième article alimentaire (13) recouvre au moins une partie d'une surface du premier article alimentaire (11), et la couche du produit de sucre chauffé (15) recouvre une partie ou la totalité d'une surface de la couche du deuxième article alimentaire (13).

5. Procédé pour fabriquer un aliment cuit en surface selon la revendication 4, dans lequel le produit de sucre chauffé est obtenu en caramélisant le sucre par chauffage.

6. Procédé pour fabriquer un aliment cuit en surface selon la revendication 4 ou 5, le procédé comportant en outre l'étape consistant à charger le premier article alimentaire (11) dans un récipient (2), recouvrir la surface du premier article alimentaire (11) avec le deuxième article alimentaire (13), saupoudrer le sucre sur la surface du deuxième article alimentaire (13), puis chauffer le sucre pour obtenir un produit de sucre chauffé.

7. Procédé pour fabriquer un aliment cuit en surface selon l'une quelconque des revendications 4 à 6, dans lequel la quantité de sucre du produit de sucre chauffé est de 0,02 g/cm² à 0,20 g/cm².
